# EUROPÄISCHE PATENTSCHRIFT

(11) **EP 1 770 632 B1**
(45) Veröffentlichungstag und Bekanntmachung des Hinweises auf die Patenterteilung: **08.04.2015**
(21) Anmeldenummer: 07000067.4
(22) Anmeldetag: 21.01.2005
(51) Int. Cl.: G06Q 30/02, G06Q 30/06

(54) **Verfahren zum Bereitstellen einer virtuellen Ware an Dritte**
Method for providing virtual goods to third parties
Procédé de distribution de marchandise virtuelle à des tiers

(30) Priorität: 22.01.2004 DE 102004003347
(43) Veröffentlichungstag der Anmeldung: 04.04.2007
(62) Teilanmeldung aus: 05701108.2
(73) Patentinhaber: Fraunhofer-Gesellschaft zur Förderung der angewandten Forschung e.V., 80686 München (DE)
(72) Erfinder: Aichroth, Patrick, 99084 Erfurt (DE); Hasselbach, Jens, 99084 Erfurt (DE); Puchta, Stefan, 98704 Langewiesen (DE); Sporer, Thomas, 90766 Fürth (DE)
(74) Vertreter: Zimmermann, Tankred Klaus

(56) Entgegenhaltungen:
- EP-A- 1 229 469
- EP-A- 1 284 481
- EP-A1- 0 696 121
- WO-A-01/41018
- DE-A1- 10 217 862
- US-A1- 2002 003 886
- US-A1- 2002 056 117
- US-A1- 2003 125 964
- US-A1- 2003 195 851

## Beschreibung

Die vorliegende Erfindung bezieht sich auf ein Verfahren zur Bereitstellung einer virtuellen Ware an Dritte, und hier insbesondere auf ein Verfahren, bei dem die virtuelle Ware in digitaler Form vorliegt und ferner zusätzliche Informationen beinhaltet, die angeben, welche Rechte ein Dritter, der die virtuelle Ware empfangen hat, an derselben erworben hat. Weiterhin bezieht sich die vorliegende Erfindung auf ein Computerprogramm, welches einen Programmcode zur Durchführen des Verfahrens zur Bereitstellung einer virtuellen Ware an Dritte aufweist.

Der Begriff "virtuelle Ware" beschreibt ein geistiges Eigentum, wie beispielsweise Musik, einen Roman, ein Bild, einen Film, ein Programm und ähnliches, welches sich in digitaler Form, typischerweise als Datei, darstellen lässt. Als Datei kommen beispielsweise eine MP3-Datei, eine PDF-Datei, eine AVI-Datei, eine EXE-Datei und ähnliches in Frage.

Die Produktion und der Vertrieb einer virtuellen Ware, wie beispielsweise von Multimedia sind kostspielig. Die Produktion und der Vertrieb werden durch einen Verteiler (Content-Provider) organisiert. Dieser trägt das ökonomische Risiko für die Produkte (virtuelle Ware). Auf diesem Modell beruht beispielsweise die globale Musikindustrie. Für den Softwarevertrieb gilt ähnliches. Nicht legalisierte Kopien oder Raubkopien von Multimedia-Produkten und Software-Produkten sowie deren unlizenzierte Weitergabe untergraben dieses ökonomische Modell. Im Fall der Musikindustrie steht die Frage im Raum, ob es in Zukunft überhaupt noch eine Produktion geben kann, wenn niemand mehr in der Lage sein wird, Autoren, Komponisten und Interpreten zu bezahlen, da deren Produkte keinen Marktwert mehr haben.

Als Gegenmaßnahme versucht beispielsweise die Softwareindustrie und die Musikindustrie die unkontrollierte Verbreitung ihrer Produkte zu beschränken. Die Softwareindustrie und die Musikindustrie steht jedoch hier vor einem Dilemma: einerseits will sie legalen Käufern die Produkte aushändigen, d. h. die Produkte auf die Nutzergeräte überspielen und damit in den Machtbereich der Nutzer geben. Dort aber sollen sie dem Gebrauchswillen der Nutzer nur eingeschränkt zur Verfügung stehen. Die Machtmittel zu dieser Einschränkung haben aber nicht die Verteiler (Content-Provider), sondern lediglich deren Nutzer. Allerdings verzichten die Nutzer in Scharen darauf, sich derart einzuschränken - vielmehr verteilen sie die erworbenen Produkte einfach weiter. Die Musikindustrie reagiert hier beispielsweise mit einem Sicherheitskonzept, das die Nutzer zum Gebrauch von Abspielgeräten verpflichtet, in denen die Verwendung der Produkte im Nutzergerät kontrolliert wird. In dem von dem Benutzer oder Nutzer-erworbenen Produkt (Content Stream) ist die Spezifikation sogenannter IPMP-Elemente enthalten (IPMP = Intellectual Property Rights Management and Protection = Verwaltung und Schutz von geistigen Schutzrechten). Erst diese IPMP-Elemente ermöglichen es überhaupt, das erworbene Produkt auf einem Endgerät abspielen zu können. Das Problem hierbei besteht darin, dass jedes Produkt die Elemente seiner Entschlüsselung in sich trägt, so dass durch eine geeignete Umprogrammierung die Einschränkungen der IPMP-Elemente aufgehoben werden können. Diese Umprogrammierung kann beispielsweise durch einen einfachen Personalcomputer erfolgen. Die Industriestandards setzen darauf, dass eine ökonomisch signifikant große Anzahl von Kunden sich an die Funktionalität der standardisierten IPMP-Geräte halten wird.

Das Prinzip der gängigen Rechtemodelle, z. B. IPMP, sieht vor, dass ein Element, das im Endgerät installiert ist, die Verwendung eines erworbenen Produkts im Endgerät bei dem Benutzer steuert. Insbesondere verhindert es eine unkontrollierte Weitergabe. Ein Interesse des individuellen Nutzers wird dabei nicht befriedigt. Im Gegenteil, der Nutzer wird in seiner freien Verfügbarkeit eingeschränkt. Vielmehr wird der Nutzer herangezogen, um mittels seines Gerätes das Interesse des Vertreibers, nämlich das Verhindern der unkontrollierten Weiterverteilung der Produkte, zu unterbinden.

Damit verletzt dieses Modell ein fundamentales Prinzip offener Sicherheitsanforderungen, nämlich dasjenige, das in einer offenen Welt von Kommunikationspartnern, die keiner zentralen Kontrolle unterliegen, diejenigen, die ein Interesse verfolgen, auch die Mittel in der Hand haben müssen, dieses Interesse durchzusetzen. Dies geschieht z. B. bei dem Austausch von signierten Willenserklärungen, Quittungen und Verträgen. Derjenige der an der Erfüllung eines Versprechens seines Kommunikationspartners ein Interesse hat, verfügt mit der Signatur des Partners über ein durch den Partner nicht abstreitbares Beweismittel, mit dem er die Erfüllung des Versprechens, notfalls vor Gericht, erzwingen kann.

Bei dem IPMP-Ansatz ist das Gegenteil der Fall. Diejenigen, die an der Einschränkung des Gebrauchs ihrer Produkte ein Interesse haben, geben die Mittel zur Durchsetzung ihrer Interessen in die Hand eines Kommunikationspartners, der durch dieses Mittel in seinen Interessen gerade eingeschränkt wird.

Dies erklärt den großen Erfolg von Internet-Tauschbörsen, wie beispielsweise Napster und nachfolgenden File-Sharing-Modellen.

Somit besteht ein Bedarf das Sicherheitsmodell für Multimediarechte, insbesondere im Internet, wieder auf gesunde Füße zu stellen.

Ein Ansatzpunkt besteht darin, dass selbst einschränkende Wohlverhalten der Benutzer mit eigenen Vorteilen zu verbinden, die stärker sind, als jedes davon abweichende Verhalten. Diese Vorteile könnten beispielsweise Rabatte, Rückgabemöglichkeiten oder Qualitätsgarantien umfassen.

Stärker als diese Anreize ist jedoch die Umkehrung der oben erwähnten Interessenslage, nämlich dahingehend, dass die Weiterverteilung von Multimediaprodukten, die ja offenbar im Interesse der Nutzer liegt, auch von den Vertreibern als in ihrem eigenen Interesse liegend erkannt und entsprechend nicht behindert, sondern im Gegenteil gefördert werden. Interesse der Verteiler muss es sein, dass die Kunden (Benutzer) die Produkte weiter verteilen, so viel und so weit wie möglich, was gar nicht abwegig ist, da der Vertreiber von Produkten ohnehin ein Interesse daran hat, dass die Produkte weit verbreitet werden. Natürlich liegt ein Grundinteresse des Vertreibers darin, dass für die vertriebenen Produkte bezahlt werden soll.

Um dies zu erreichen, wird der Nutzer zu Vertriebspartnern der Verteiler gemacht, also zu Vertriebsknoten. Nutzer, die ein Multimediaprodukt oder eine Software oder ähnliche virtuelle Ware bezahlen und weiterverbreiten, erhalten vom Kaufpreis, den der Empfänger für das erhaltene Produkt bezahlt, eine Vermittlungsprovision. Zahlt der Empfänger keinen Kaufpreis, erhält der Sender auch keine Vermittlungsprovision, allerdings kann auch dann der Empfänger niemals seinerseits eine Vermittlungsgebühr erhalten. Um den gerade beschriebenen Ansatz zu ermöglichen muss die virtuelle Ware gekennzeichnet werden, um die ggf. erworbenen Rechte der virtuellen Ware zuzuordnen.

Ein Beispiel für die gerade erwähnte Kennzeichnung der virtuellen Ware ist beispielsweise in der DE 102 17 862 A beschrieben, welche ein Verfahren offenbart, um eine virtuelle Ware beim Verteilen derselben an Dritte zu kennzeichnen. Die virtuelle Ware liegt in digitaler Form vor und die Kennzeichnung gibt an, welche Rechte ein Dritter, der die virtuelle Ware empfangen hat, an der virtuellen Ware erworben hat. Gemäß diesem Verfahren wird die virtuelle Ware durch einen Vertreiber bereitgestellt und ein elektronischer Beleg wird für die bereitgestellte virtuelle Ware erzeugt und der in Dateiform vorliegenden virtuellen Ware zugeordnet. Nach dem Verteilen der Datei an einen Dritten wird, falls der Dritte Rechte an der virtuellen Ware erwerben will, zunächst die erforderliche Transaktion durchgeführt, um das erwünschte Recht zu erwerben. Nach Abschluss der Transaktion wird eine elektronische Quittung erzeugt, die der Datei mit dem zugeordneten elektronischen Beleg zugeordnet wird. In der Quittung sind Informationen bezüglich der Rechte abgelegt, die der Dritte durch die Transaktion erworben hat.

Das in der DE 102 17 862 A beschriebene Verfahren ist zwar dahingehend vorteilhaft, dass nun der Käufer eines Produkts zur weiteren Verteilung seiner virtuellen Ware, die er rechtmäßig erworben hat, ermuntert wird, da ihm nun für den Fall, dass ein Empfänger diese Ware ebenfalls kauft, eine entsprechende Provision zusteht.

Nachteilhaft ist jedoch, dass hier stets die virtuelle Ware im Originalformat, also in der ursprünglichen Version, an Dritte weiterversendet wird, so dass diese, unabhängig davon, ob die Rechte an dieser Ware erworben werden oder nicht, eine vollständige Version der virtuellen Ware in Händen halten. Die Belohnung des ersten Käufers, der die Ware weiterverteilt hat, hängt somit einzig und allein vom guten Willen des Empfängers ab, der, obwohl schon eine Vollversion in Händen haltend, den Kauf derselben tätigen muss.

Die US 2003/0195851 A1 offenbart ein System und ein Verfahren zum Verwalten der Verteilung von digitalem Audio-Inhalt. Ein Host-ID-Code ist in einer Audiodatei eingebettet, wobei ein Abspielgerät diesen ID-Code detektieren wird und abhängig von dem detektierten ID-Code nur einen Teil der Audiodatei abspielen wird.

Die EP 0 696 121 A1 offenbart ein Verfahren und ein System zum Sicherstellen von Lizenzzahlungen für über ein Netz gelieferte Daten. Eine verschlechterte Version von Daten wird über ein Netz geliefert, wobei keine Lizenzzahlungen anfallen. Wenn der Benutzer dazu berechtigt ist, erhält er eine Version mit höherer Qualität, wobei die Berechtigung des Benutzers davon abhängt, ob eine Lizenzzahlung von dem Benutzer erhalten worden ist.

Die US 2003/0125964 A1 offenbart ein System und ein Verfahren zum gesteuerten Verteilen von digitalem urheberrechtsgeschütztem Material mit einem mehrstufigen Marketingmodell. Hierzu wird eine Benutzer-ID zusammen mit einem Wasserzeichen verwendet, das die Benutzer-ID des registrierten Benutzers verwendet. Wenn eine Datei weitergegeben wird, wird das Wasserzeichen aktualisiert, um die Benutzer-ID des registrierten Benutzers zu enthalten, der Daten weitergegeben hat.

Die technische Aufgabe der vorliegenden Erfindung besteht darin, eine alternative Sicherung einer virtuellen Ware zu schaffen, die eine hohe Benutzerfreundlichkeit liefert.

Diese Aufgabe wird durch ein Verfahren nach Anspruch 1 oder Anspruch 2 gelöst.

Die Erfindung betrifft ein Verfahren zum Verteilen einer virtuellen Ware von einem ersten Käufer an einen zweiten Käufer, wobei der erste Käufer ein vorbestimmtes Recht an der ursprünglichen Version der virtuellen Ware von einem Anbieter erworben hat und von dem Anbieter die virtuelle Ware in einer ursprünglichen Version in digitaler Form mit einer vorbestimmten Qualität erhalten hat, mit folgenden Schritten: Auswählen der zu verteilenden virtuellen Ware und Extrahieren von Inhaltsidentifikationsdaten, die die virtuelle Ware identifizieren; Einloggen bei einem Server und Übertragen der Inhaltsidentifikationsdaten zu dem Server; Empfangen von dem Server einer personalisierten Kopie der virtuellen Ware mit reduzierter Qualität, oder Empfangen von Transaktionsdaten von dem Server, wobei die Transaktionsdaten den ersten Käufer eindeutig referenzieren, Erzeugen durch den ersten Käufer einer Kopie der virtuellen Ware mit reduzierter Qualität und Personalisieren der Kopie der virtuellen Ware mit reduzierter Qualität basierend auf den Transaktionsdaten, wobei die Kopie der virtuellen Ware mit reduzierter Qualität alle Informationen zur Vollwertigkeit in sich trägt, wobei die Vollwertigkeit nur durch einen Schlüssel erreichbar ist; Verteilen lediglich der personalisierten Kopie der virtuellen Ware mit reduzierter Qualität zu dem zweiten Käufer; und Erhalten einer Belohnung, wenn der zweite Käufer basierend auf der personalisierten Kopie der virtuellen Ware mit reduzierter Qualität eine Vollversion der virtuellen Ware erworben hat.

Die Erfindung betrifft ferner ein Verfahren zum Verteilen einer virtuellen Ware von einem ersten Käufer an einen zweiten Käufer, mit folgenden Schritten: Empfangen von Login-Informationen und von Inhaltsidentifikationsdaten, die eine zu verteilende virtuelle Ware identifizieren, von dem ersten Käufer, wobei der erste Käufer ein vorbestimmtes Recht an der ursprünglichen Version der virtuellen Ware von einem Anbieter erworben hat und von dem Anbieter die virtuelle Ware in einer ursprünglichen Version in digitaler Form mit einer vorbestimmten Qualität erhalten hat; Überprüfen, ob der erste Käufer ein registrierter Nutzer ist, basierend auf den Login-Informationen und den Inhaltsidentifikationsdaten; Erzeugen und Senden von Transaktionsdaten zu dem ersten Käufer, wobei die Transaktionsdaten den ersten Käufer eindeutig referenzieren, wenn der erste Käufer berechtigt ist, eine Kopie der virtuellen Ware mit reduzierter Qualität zu erzeugen, oder Erzeugen und Senden einer personalisierten Kopie der virtuellen Ware mit reduzierter Qualität zu dem ersten Käufer, wobei die Kopie der virtuellen Ware mit reduzierter Qualität alle Informationen zur Vollwertigkeit in sich trägt, wobei die Vollwertigkeit nur durch einen Schlüssel erreichbar ist; Erhalten von Inhaltsidentifikationsdaten, die die virtuelle Ware identifizieren, und von Informationen, die den ersten Käufer eindeutig referenzieren, von dem zweiten Käufer; und Gewähren einer Belohnung durch den Server, wenn der zweite Käufer basierend auf der personalisierten Kopie der virtuellen Ware mit reduzierter Qualität einen Kauf einer Vollversion der virtuellen Ware getätigt hat; und Senden des Schlüssels zu dem zweiten Käufer.

Vorzugsweise umfasst das vorbestimmte Recht z. B. Kauf, Miete etc..

Die reduzierte Version der virtuellen Ware, also die Kopie derselben mit reduzierter Qualität kann in diesem Fall durch Beschränken der Bitrate/Bandbreite der ursprünglichen Version der virtuellen Ware, durch das Einfügen von Sprache und/oder von Klängen in die ursprüngliche Version oder eine hierarchische Codierung der ursprünglichen Version erfolgen, wobei hier bei der Codierung bestimmte Verbesserungsschichten weggelassen werden, also nur eine Basisschicht bereitgestellt wird.

Vorzugsweise ist die reduzierte Version der virtuellen Ware eine zumindest teilweise verschlüsselte Version der ursprünglichen Version , so dass das Empfangen der Informationen zum Erhalten der Vollversion das Empfangen eines Schlüssels zum Entschlüsseln der zumindest teilweise verschlüsselten Version umfasst. In diesem Fall umfasst das Bereitstellen der reduzierten Version ein zumindest teilweises Verschlüsseln der ursprünglichen Version der virtuellen Ware.

Die Informationen betreffend den Vertreiber der reduzierten Ware umfassen vorzugsweise das Einbringen von Zusatzdaten in die reduzierte Version der virtuellen Ware beispielsweise gemäß dem MPEG-1/2-Standard bzw. dem MPEG4-Standard, durch Einsatz eines eigenen Formats und/oder durch ein Wasserzeichen.

Gemäß einem weiteren bevorzugten Ausführungsbeispiel der vorliegenden Erfindung wird dem Käufer der virtuellen Ware nach dem Kauf ebenfalls eine reduzierte Version derselben bereitgestellt, und weitere Informationen, die den Vertreiber und/oder den Dritten betreffen, werden dieser weiteren reduzierten Version bereitgestellt. Hierdurch wird bei einer weiteren Verteilung der reduzierten Version an einen weiteren Dritten ermöglicht, dass weitere Informationen erzeugt werden können, die anzeigen, dass ein Erwerb eines vorbestimmten Rechts an der ursprünglichen Version der virtuellen Ware durch den weiteren Dritten auf der Verteilung der reduzierten Version durch den Vertreiber und/oder dem Dritten beruht.

Gemäß einem weiteren bevorzugten Aspekt schafft die vorliegende Erfindung ein Computerprogramm mit einem Programmcode zur Durchführung des erfindungsgemäßen Verfahrens, wenn das Programm auf einem Computer oder Rechner abläuft.

Gemäß der vorliegenden Erfindung wird somit ein verbessertes Verfahren zur Bereitstellung von virtuellen Waren an Dritte geschaffen, welches, insbesondere bei multimedialen Dateien, eine Verkaufsförderung beim Vertrieb der multimedialen Inhalte durch die Erzeugung, Verteilung und spätere Zuordnung von personalisierten Inhaltsproben ermöglicht. Im Unterschied zu herkömmlichen Verteilungs- oder Distributionssystemen, die herkömmlicherweise den Käufer in der einen oder anderen Form daran hindern, den von ihm "entdeckten" Content (Inhalt) weiterzugeben, wird erfindungsgemäß die Weitergabe des Content, in Form von minderwertigen Previews (reduzierte Version der ursprünglichen Version der virtuellen Ware) nicht verhindert, sondern belohnt.

Die erfindungsgemäße Vorgehensweise hat die Wirkung, dass der natürliche Antrieb von Konsumenten, andere mit "Entdeckungen" zu missionieren, nicht unterdrückt wird, sondern gefördert wird. Durch die Personalisierung der Previews kann ein erfolgreiches Werben dem Werbenden zugeordnet werden, was verschiedene Arten der Belohnung ermöglicht.

Das erfindungsgemäße Verfahren bietet eine Vielzahl von Vorteilen. Zum einen ist die Weitergabe der Previews attraktiver als die Weitergabe der ursprünglichen Vollversion, also des originalen Content, da zum einen eine Belohnung erhalten werden kann und zum anderen auf den Einsatz von restriktiven technischen Schutzmaßnahmen verzichtet werden kann, die zum Schutz des ursprünglichen Content erforderlich gewesen wären, was u.a. die Benutzerfreundlichkeit steigert. Ferner ergibt sich eine positive Verkaufswirkung (Werbung) durch die Weitergabe des Content, wohingegen die negativen Auswirkungen eines Verkaufs ausbleiben, die bei der Weitergabe der ursprünglichen Version gegeben wären. Der erfindungsgemäße Ansatz bietet ferner einen Zusatznutzen und "macht Spaß", da die Käufer missionieren können und auch noch dafür belohnt werden. Sie sind auch in der Situation, die Art des Werbens kreativ mitgestalten zu können, wodurch ein Wettbewerb unter den Käufern besteht. Ein weiterer Vorteil besteht darin, dass die Previews prinzipiell über jeden möglichen Distributionskanal verteilt werden können. Zusätzlich ist vorteilhaft, dass sich das erfindungsgemäße Verfahren ohne größeren Aufwand nachträglich an verschiedene, bereits existierende Distributionssysteme anhängen lässt bzw. in dieselben integriert werden kann.

Erfindungsgemäß wird somit durch das Verfahren ein Distributionssystem für virtuelle Waren oder Güter, z. B. Audio/Musik, Video etc., geschaffen, das auf eine möglichst starke Bekanntmachung des Inhalts (Content) baut, um finanzielle Erlöse für Künstler und Labels zu erreichen.

Der der vorliegenden Erfindung zugrundeliegende Gedanke besteht darin, dass die Kunden bei oder nach Kauf eines Objekts eine abgewertete Kopie (reduzierte Version) des Originals, also ein Preview, erhalten, wobei diese Kopie auf den Kunden personalisiert ist und alle Informationen zum erneuten Kauf in sich trägt. Die freie Weitergabe dieses Previews ist nicht nur erlaubt, sondern erwünscht. Führt die Weitergabe zu einem erneuten Kauf kann die Transaktion dem Werbenden zugeordnet werden. Darauf können verschiedene Business-Modelle aufbauen, die ein erfolgreiches Werben belohnen. Hierdurch entsteht ein "natürlicher" Anreiz für den Käufer, nicht das Original, sondern Previews weiterzugeben. Die freie Verbreitung von Previews führt zu einem hohen Bekanntheitsgrad des Inhalts und wirkt somit verkaufsfördernd. Durch die geringe Größe der Previews kommen viele Distributionskanäle in Frage. Das System kann mit einem vorhandenen Kopierschutz koexistieren, ist aber nicht darauf angewiesen. Die zentral gesammelten Daten eignen sich weiterhin für Marktforschungszwecke.

Gemäß dem bevorzugten Ausführungsbeispiel der vorliegenden Erfindung auch als das "große Preview" bezeichnet, wird eine künstlich abgewertete Version des Originals weitergegeben, die aber die notwendigen Informationen zur Vollwertigkeit bereits in sich trägt. Beim Kauf muss lediglich ein Schlüssel übertragen/erworben werden, um die Vollwertigkeit zu erhalten.

Zusätzlich kann vorgesehen sein, dass die Käufer die ihnen zugeordneten Previews selbst weiter gestalten, z. B. eigene Schnitte durchführen, Zusatzinformationen einbringen, z. B. eine eigene Meinung, Informationen zum Interpreten, Texte und ähnliches. Auch Verweise auf eigene Websites können eingebunden werden. Diese Informationen können in einem beliebigen, gängigen Format, beispielsweise im HTML-Format oder im XML-Format, bereitgestellt werden.

Für das erfindungsgemäße Verfahren öffnen sich eine Vielzahl von möglichen Anwendungen. Beispielsweise sei hier das in der oben genannten DE 102 17 862 A beschriebene Verfahren genannt, wobei in diesem Fall die Belohnung in Form einer Beteiligung am Folgeerlös vorläge. Der Vertrieb kann über einen herkömmlichen Download oder über einen Peer-To-Peer-Ansatz erfolgen. Übliche Download-Portale können mit dem erfindungsgemäßen erweitert werden, indem die Belohnung beispielsweise in der Form von Boni, Titel, Punkten und bestimmten Privilegien, wie z. B. "bevorzugter Benutzer", oder eines Künstlerkontakts vorliegen. Auch der herkömmliche bzw. traditionelle Vertrieb kann erweitert werden. Mittels eines dem Käufer einer Audio-CD oder einer DVD bereitgestellten Tools, beispielsweise auf der CD/DVD oder über einen Download, können von den herkömmlichen Audio-CDs oder DVD-Audios Previews erstellt werden und verteilt werden.

Auch eine sogenannte "Superdistribution" eröffnet sich, gemäß der die "großen Previews" auf physischen Tonträgern oder über Netzwerke verbreitet werden, wobei die Freischaltung nachträglich durch einen Schlüssel erfolgt. Ferner können in diesem Zusammenhang herkömmlichen Tonträgern mit Auslieferung die "großen Previews" beigefügt werden.

Für existierende P2P-Dienstleistungen (P2P = Peer-To-Peer) ergibt sich erfindungsgemäß die Möglichkeit eines Zusatzes, indem eine Vielzahl von Previews gemeinsam verwendet wird, wobei keine Originale bereitgestellt werden. Ferner ermöglicht sich eine Bindung an das Download-Portal.

Für ein Preview-Portal ergibt sich die Möglichkeit, einen neuen Inhalt bereitzustellen, und die Verbreitung, Popularität und den Wert desselben zu ermitteln. Darüber hinaus lassen sich so gute Scouts ermitteln, also Vertreiber, die erfolgreich Werbung machen und/oder ein gutes Gespür für Inhalt mit Zukunftspotenzial zeigen.

Gemäß einem weiteren bevorzugten Ausführungsbeispiel kann das erfindungsgemäße Verfahren als "Lockmittel" über Printmedien dienen, wobei hier beispielsweise bei Konzerten, im Kino und ähnlichen Veranstaltungen Zugangscodes, beispielsweise auf der Eintrittskarte, zugeteilt werden, die nach Eingabe bestimmte Previews zum Download bereitstellen, wobei in diesem Fall dann dem Veranstalter, der diese Zugangscodes auf der Zutrittskarte bereitgestellt hat, die Belohnung bei Kauf der Vollversion gewährt wird.

Für die Speicherung und Übertragung von Audio/Musik-Inhalten als Previews bieten sich vorzugsweise gängige Standards wie MPEG-1/2 oder MPEG-4 sowie Audiocodierverfahren wie MP3, AAC, u.a. an, aber auch MIDI. Als Distributionsmedium kommen vorzugsweise Netzwerke, tragbare Speichermedien, portable Rechner und Handys in Frage. Die Wahl des jeweils geeigneten Formats und Codierverfahrens hängt vom Distributionsmedium an, bei der Übertragung über Handy bietet sich beispielsweise der MMS-Standard an ein zu Vergleichszwecken dargestelltes

Das technische Verfahren zur Realisierung für die "großen Previews" ist die Verschlüsselung, wobei hier ohne den entsprechenden Schlüssel eine schlechtere Qualität erreicht wird. Ähnlich kann hier eine hierarchische Codierung erfolgen, bei der der Preview lediglich die Basisschicht enthält und die vollwertige Version zusätzlich die Verbesserungsschichten enthält, die mittels des erforderlichen Schlüssels freigeschaltet werden können.

Die Verbindung zwischen Preview und Original kann, beispielsweise beim traditionellen Vertrieb, durch eine geeignete Audioidentifizierung erfolgen.

Die Personalisierung bzw. Einbringung von zusätzlichen Informationen in das Preview kann durch herkömmliche Formate, wie z. B. die Hilfsdaten gemäß dem AAC-Standard und dem MP3-Standard (ID3-Tag), erreicht werden. Alternativ kann ein eigenes Format benutzt werden oder ein Wasserzeichen kann eingebracht werden.

Nachfolgend werden bevorzugte Ausführungsbeispiele der vorliegenden Erfindung anhand der beiliegenden Figuren näher erläutert. Es zeigen:
- Fig.1: eine graphische Darstellung zur Veranschaulichung des erfindungsgemäßen Verfahrens;
- Fig. 2A und 2B: ein Flussdiagramm des erfindungsgemäßen Verfahrens gemäß einem bevorzugten Ausführungsbeispiel;
- Fig. 3: eine graphische Darstellung zur Veranschaulichung einer bevorzugten Ausführungsform des erfindungsgemäßen Verfahrens;
- Fig. 4: eine Darstellung der Aktionen zwischen verschiedenen Entitäten, wenn als Vergleichsbeispiel die reduzierte Version der virtuellen Ware ein "kleines Preview" ist; und
- Fig. 5: eine Darstellung der Aktionen zwischen verschiedenen Entitäten, wenn die reduzierte Version der virtuellen Ware ein "großer Preview" ist.

In der nachfolgenden Beschreibung der bevorzugten Ausführungsbeispiele der vorliegenden Erfindung werden für gleiche oder gleichwirkende Elemente gleiche Bezugszeichen verwendet.

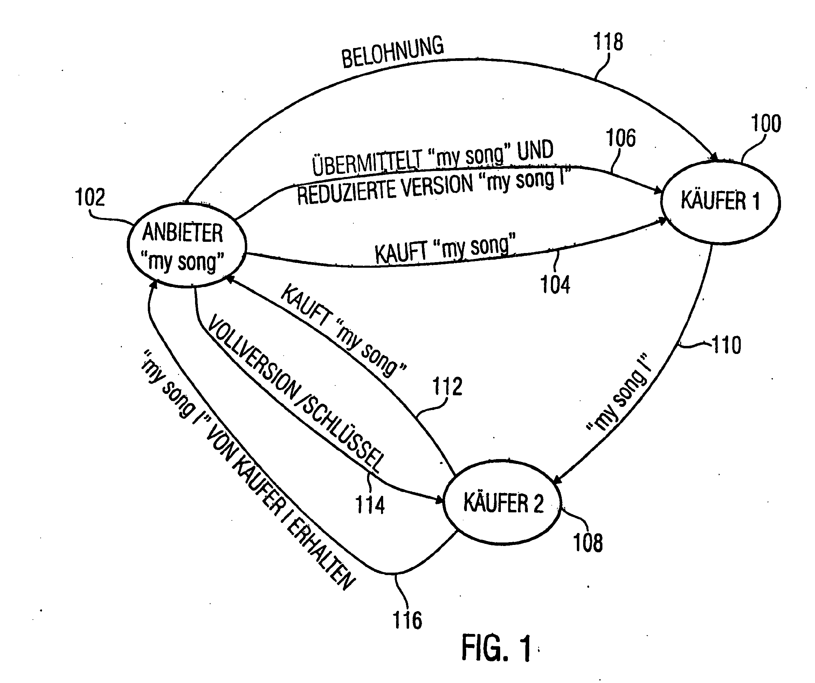

Fig. 1 zeigt eine graphische Darstellung, die das erfindungsgemäße Verfahren im Überblick veranschaulicht. Ein erster Käufer 100 hat Informationen über eine ihn interessierende virtuelle Ware, im Beispielfall ein Musiktitel, der beispielhaft als "mysong" bezeichnet sei. Der Musiktitel "mysong" wird von einem Anbieter 102, beispielsweise einem Netzwerkdienst, einer Plattenfirma oder ähnlichem, bereitgestellt und zum Verkauf angeboten. Der erste Käufer 100 kauft nun den Musiktitel "mysong" (Pfeil 104) und infolgedessen übermittelt der Anbieter 102 eine Vollversion des Musiktitels "mysong" zusammen mit einer reduzierten Version "Mysong I" (siehe Pfeil 106) an den ersten Käufer 100. Der reduzierten Version sind ferner Informationen betreffend den ersten Käufer 100 zugeordnet, die diesen als Käufer der Vollversion kennzeichnen. Diese Informationen wurden beispielsweise während des Kaufvorgangs erhalten. Alternativ kann vorgesehen sein, dass der erste Käufer 100 die erforderlichen Instrumente aufweist, um aus der Vollversion die reduzierte Version zu erstellen, und zusätzlich die ihm zugeordneten Informationen dieser reduzierten Version zuzuordnen. In diesem Fall wäre eine weitere Übertragung zwischen dem ersten Käufer 100 und dem Anbieter 102 erforderlich, um auch dem Anbieter diese Informationen, insbesondere die Zuordnung zwischen der reduzierten Version und dem ersten Käufer, bereitzustellen.

Nach Kauf des Musikstücks entscheidet sich der Käufer 100, dasselbe an einen Bekannten, dem zweiten Käufer 108, weiterzugeben. Erfindungsgemäß gibt der erste Käufer 100 jedoch nicht die Vollversion weiter, sondern lediglich die reduzierte Version mit den dem ersten Käufer 100 zugeordneten Informationen, wie dies durch den Pfeil 110 hervorgehoben ist. Der zweite Käufer 108 spielt nun die reduzierte Version des Musiktitels und entscheidet sich, eine Vollversion desselben zu erwerben. Er kauft daher vom Anbieter 102 die Vollversion von "mysong" (siehe Pfeil 112) und erhält im Gegenzug (Pfeil 114) von dem Anbieter 102 die Vollversion bzw. den Schlüssel zur Umwandlung der reduzierten Version in die Vollversion. Ferner wird eine Information an den Anbieter 102 weitergeleitet, die anzeigt, dass der zweite Käufer 108 die reduzierte Version von dem ersten Käufer 100 erhalten hat. Hierfür kann beispielsweise einfach die der reduzierten Version zugeordnete Information von dem zweiten Käufer 108 an den Anbieter 102 weitergeleitet werden, wie dies durch den Pfeil 116 verdeutlicht ist. Basierend auf den vom zweiten Käufer 108 erhaltenen Informationen bestimmt der Anbieter 102 die festgelegte Belohnung des ersten Käufers 100, beispielsweise in Form einer Provision, und gibt diese an den ersten Käufer 100 weiter, wie dies durch den Pfeil 118 angedeutet ist.

Bei dem in Fig. 1 gezeigten Beispiel ist der Anbieter 102 vorgesehen, der eine Vielzahl von Musiktiteln oder anderen virtuellen Gütern zum Verkauf anbietet. Bei diesen Gütern kann es sich um solche handeln, die vom Anbieter selbst erzeugt wurden, oder solche, die durch andere erzeugt wurden und über den Anbieter 102 vermarktet werden. In diesem Fall würde diejenige Person, die den Musiktitel "mysong" erzeugt hat, sich zunächst beim Anbieter 102 registrieren, um so sicherzustellen, dass die Verkaufserlöse anteilmäßig auch an den wahren Inhaber der Rechte laufen. Dies kann beispielsweise auf eine Art und Weise erfolgen, wie sie in der DE 102 17 862 A beschrieben wurden.

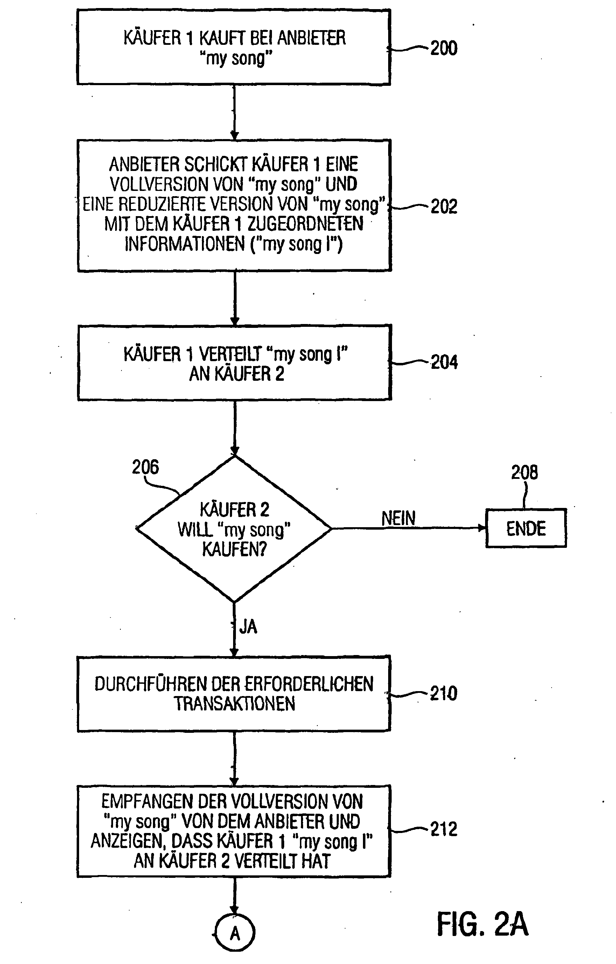

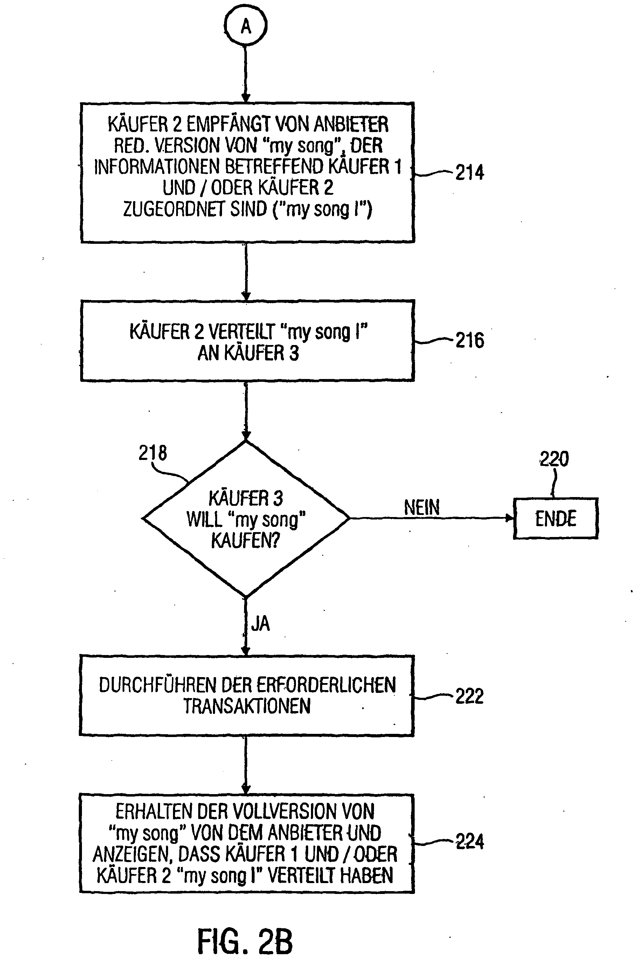

Anhand der Fig. 2A und 2B wird nachfolgend das erfindungsgemäße Verfahren zur Implementierung der Abläufe, wie sie anhand der Fig. 1 beschrieben wurden, näher erläutert. Das erfindungsgemäße Verfahren startet vorzugsweise damit, dass der erste Käufer 100 im Schritt 200 bei dem Anbieter 102 den Musiktitel "mysong" kauft. Hierauf schickt der Anbieter 102 an den ersten Käufer 100 im Schritt 202 eine Vollversion von "mysong" und eine reduzierte Version von "mysong", die zusätzlich dem ersten Käufer zugeordnete Informationen enthält. Der erste Käufer 100 verteilt im Schritt 204 die reduzierte Version, also den Preview von "mysong", an den zweiten Käufer 108, der sich dann im Schritt 206 entscheidet, ob er die Vollversion "mysong" kaufen will oder nicht. Will der zweite Käufer 108 die Vollversion nicht kaufen, so behält dieser lediglich die reduzierte Version und das Verfahren endet bei 208.

Entscheidet sich der zweite Käufer 108, "mysong" zu kaufen, so geht das Verfahren zum Schritt 210 weiter, bei dem die erforderlichen Transaktionen durchgeführt werden, um ein vorbestimmtes Recht an "mysong", beispielsweise Eigentum, zeitlich begrenzte Nutzungsdauer oder ähnliches, zu erhalten. Diese Transaktion schließt zum einen die Angabe ein, welche Rechte der zweite Käufer 108 erwerben will (abhängig von den durch den Anbieter 102 angebotenen verfügbaren Rechten), und zum anderen die entsprechende Bezahlung, was mit einem herkömmlichen Online-Payment-System durchgeführt werden kann, z. B. Paybest, Micromoney, Paybox oder ähnliches. Nachdem die erforderlichen Transaktionen zum Erhalten von Rechten an "mysong" erfolgreich abgeschlossen wurden, wird im Schritt 212 durch den Anbieter 102 beispielsweise die Vollversion von "mysong" an de zweiten Käufer 108 bereitgestellt. Ferner wird nun angezeigt, dass das Preview, auf dessen Grundlage der zweite Käufer 108 den Kauf getätigt hat, von dem ersten Käufer 100 an den zweiten Käufer 108 verteilt wurde. Auf der Grundlage dieser Informationen bestimmt dann der Anbieter 102 eine dem ersten Käufer 100 zustehende Belohnung.

Fig. 2B zeigt weitere Schritte gemäß einem bevorzugten Ausführungsbeispiel der vorliegenden Erfindung, die die erfindungsgemäße Vorgehensweise betreffen, wenn der zweite Käufer 108 ebenfalls eine reduzierte Version seines Musiktitels an einen weiteren, dritten Käufer verteilt. Sofern diese Möglichkeit dem zweiten Käufer 108 gegeben werden soll, empfängt derselbe von dem Anbieter 102, ähnlich wie der erste Käufer, eine reduzierte Version von "mysong" oder erzeugt mittels geeigneter Instrumente basierend auf der erhaltenen Vollversion oder der ohnehin bei ihm vorhandenen reduzierten Version eine neue reduzierte Version, die zusätzliche Informationen enthält, die entweder nur ihn, den zweiten Käufer 108, allein betreffen, oder zusätzlich zu dem ersten Käufer 100 Informationen über den zweiten Käufer 108 der reduzierten Version hinzufügen. Nachdem diese Aktionen im Schritt 214 durchgeführt wurden, kann der zweite Käufer die so veränderte Preview oder reduzierte Version an den dritten Käufer im Schritt 216 verteilen. Im Schritt 218 entscheidet sich der dritte Käufer, ob er "mysong" ebenfalls kaufen möchte. Falls dies nicht zutreffend ist, endet das Verfahren bei 220. Sofern der dritte Käufer "mysong" kaufen möchte bzw. bestimmte Rechte an demselben erwerben will, werden im Schritt 222 die erforderlichen Transaktionen, ähnlich wie im Schritt 210, durchgeführt. Anschließend erfolgt im Schritt 224, ähnlich wie im Schritt 212, die erforderliche Aktion, um den dritten Käufer die Vollversion von "mysong" zukommen zu lassen. Ferner werden an den Anbieter die dem Preview zugeordneten Informationen betreffend den ersten Käufer und/oder den zweiten Käufer weitergeleitet, um so dem Anbieter die Möglichkeit zu geben, die festgelegte Belohnung an den ersten Käufer und/oder den zweiten Käufer weiterzugeben.

Die oben beschriebenen verschiedenen Schritte können nun für eine beliebige Anzahl von anderen Käufern wiederholt werden.

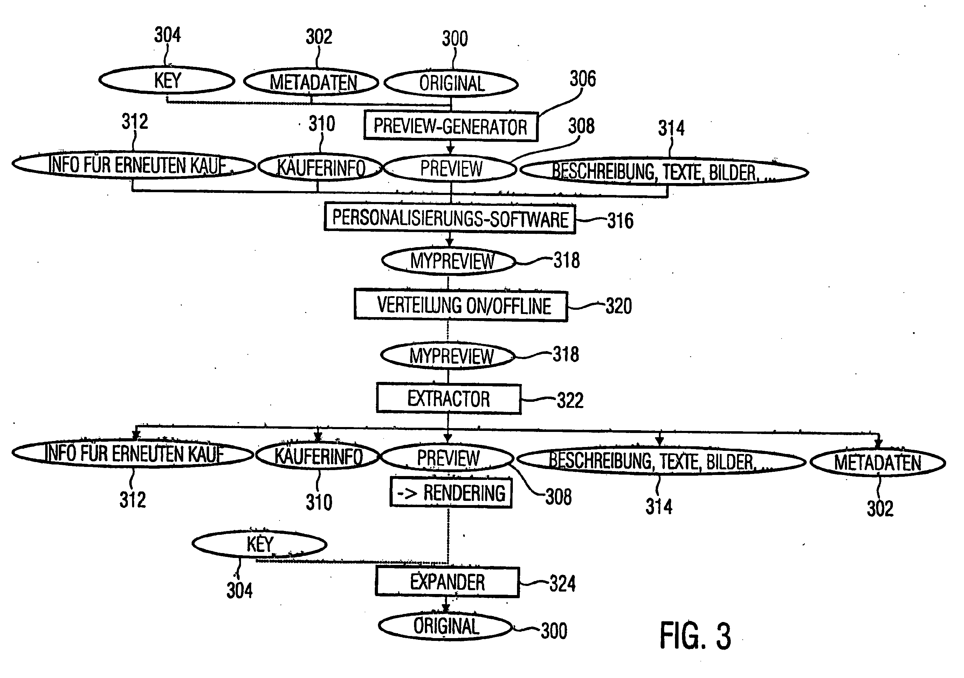

Fig. 3 zeigt eine graphische Darstellung zur Veranschaulichung einer bevorzugten Ausführungsform des erfindungsgemäßen Verfahrens, wobei bei dieser Ausführungsform davon ausgegangen wird, dass ein erster Käufer 100 von dem Anbieter lediglich die Originalversion empfängt, und ferner die erforderlichen Instrumente, z. B. in Form geeigneter Software-Tools, die durch den Anbieter bereitgestellt werden können, aufweist, um die reduzierte Version mit zugeordneter Information betreffend den ersten Käufer 100 zu erzeugen. Alternativ kann natürlich auch vorgesehen sein, dass, wie oben bereits erwähnt, sowohl die Originalversion als auch die reduzierte Version mit relevanten Kundeninformationen durch den Anbieter an den ersten Käufer übermittelt wird.

Der erste Käufer 100 hat eine Originalversion 300 der virtuellen Ware, beispielsweise des Musiktitels "mysong", erhalten, zusammen mit dem Original 300 zugeordneten Metadaten 302 und einem Schlüssel 304 (der Schlüssel wird nur bei den "großen Previews" benötigt, um die Vollversion zur Erzeugung des Preview zumindest teilweise zu verschlüsseln, beim zu Vergleichszwecken dargestellten "kleinen Preview" wird keine Verschlüsselung durchgeführt). Basierend auf dem Original 300, den Metadaten 302 und dem Schlüssel 304 wird in einem Preview-Generator 306 die reduzierte Version (das Preview) 308 des Originals 300 erzeugt. Über weitere Softwaretools werden dem Preview 308 nun Käuferinformationen 310 sowie Informationen betreffend den erneuten Kauf 312 zugeordnet. Diese Informationen 312 für den erneuten Verkauf umfassen einen Verweis auf den Content und einen Verweis auf den Server. Ferner *kann* ein Verweis auf den (neuen) Käufer gegeben werden. Ferner kann der erste Käufer 300 weitere Informationen 314, beispielsweise in Form einer Beschreibung, Texten oder Bildern, dem Preview 308 zuordnen. Über eine Personalisierungs-Software 316 wird basierend auf dem Preview 308 und den weiteren Informationen 310 - 314 ein personalisiertes Preview (MyPreview) 318 erzeugt. Dieses personalisierte Preview 318 enthält nun neben dem eigentlichen Preview auch alle erforderlichen Daten, um nach der Verteilung und nach dem Kauf der Originalversion durch einen Dritten den ersten Käufer ausreichend genau zu identifizieren, so dass dieser die festgelegte Belohnung erhält.

Der erste Käufer 100 hat nun die Möglichkeit, das personalisierte Preview 318 zu verteilen, wie dies bei 320 gezeigt ist. Die Verteilung erfolgt entweder online oder offline an einen zweiten Käufer. Dieser zweite Käufer 108 empfängt das personalisierte Preview 318. Der zweite Käufer besitzt die erforderlichen Instrumente, um aus dem empfangenen Preview 318 die ihn interessierenden Informationen zu erhalten. Zu diesem Zweck ist der Extraktor 322 vorgesehen, der aus dem personalisierten Preview 318 zum einen das ursprüngliche Preview 308 sowie die diesem zugeordneten Informationen 302, 310, 312 und 314, nicht jedoch den Schlüssel 304, erzeugt. Der zweite Käufer 108 hat nun die Möglichkeit, das Preview 308 zu betrachten und sich zu entscheiden, ob er die Vollversion erhalten möchte. Entscheidet er sich zum Erwerb der Vollversion, so werden, wie oben beschrieben, die erforderlichen Transaktionen durchgeführt, und ferner die Käuferinformationen 310 an den Anbieter weitergeleitet, um so die Belohnung des ersten Käufers 100 in die Wege zu leiten. Ferner erhält der zweite Käufer 108 nach dem Kauf der Vollversion zusätzlich die fehlende Schlüsselinformation 304. Der Expander 324 erzeugt basierend auf dem Preview 308 und dem Schlüssel 304 wiederum das Original 300.

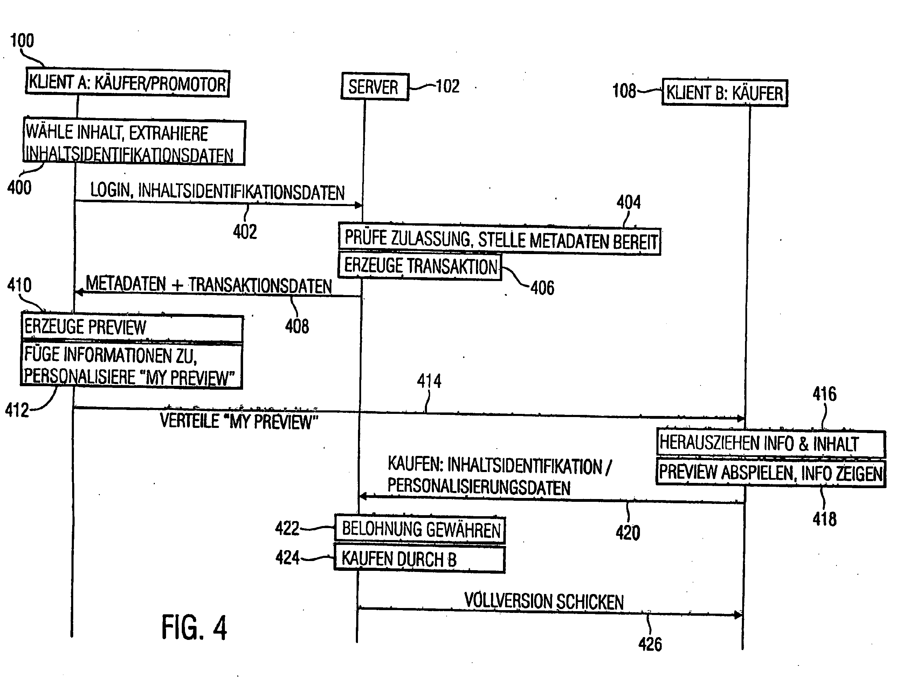

Fig. 4 zeigt eine Darstellung der Aktionen, die zwischen einem ersten Käufer, einem zweiten Käufer und einem Server ablaufen, wenn nach dem Erwerb eines Musiktitels ein zu Vergleichszwecken dargestelltes Verfahren unter Verwendung der sogenannten "kleinen Previews" durchgeführt wird. Der Erwerb kann hier auf herkömmliche Art und Weise, beispielsweise über eine Audio-CD, erfolgen oder online,.durch Erwerb einer entsprechenden Audiodatei. Für die Beschreibung der Fig. 4 wird davon ausgegangen, dass der Klient A (siehe Bezugszeichen 100) ein erster Käufer bzw. ein Promotor ist, der auf die oben beschriebene Art und Weise bereits eine Vollversion des Musikstücks erworben und im Besitz hat. Ferner ist der Server 102 vorgesehen, der, ähnlich wie der Anbieter in Fig. 1 und 2, die erforderlichen Informationen enthält und bereitstellt, um zum einen den weiteren Käufer mit den erforderlichen Informationen zur Freischaltung der Vollversion zu versorgen und zum anderen dem ersten Käufer dessen zustehende Belohnung zukommen zu lassen. In Fig. 4 ist der zweite Käufer als Klient B (siehe Bezugszeichen 108) bezeichnet.

Nachdem der erste Käufer 100 das Musikstück erhalten hat, kann sich dieser entscheiden, an dem erfindungsgemäßen Verfahren teilzuhaben, wobei dies voraussetzt, dass er vorzugsweise die erforderlichen Instrumente bereits besitzt. Sollte dies nicht der Fall sein, kann er sich bei dem Server 102 als an dem Verfahren Mitwirkender registrieren lassen, und erhält dann die entsprechenden Informationen, um sich gegenüber dem Server zu identifizieren, und auch die erforderlichen Softwaretools, um die erfindungsgemäß erforderlichen Schritte durchzuführen. Für das Beispiel der Fig. 4 sei angenommen, dass der erste Käufer 100 bereits bei dem Server 102 registriert ist, also die erforderlichen Vorbereitungsschritte bereits alle durchgeführt wurden. Wie oben erwähnt, sind Beispiele für solche Vorbereitungsschritte aus der DE 102 17 862 A entnehmbar.

Entscheidet sich der erste Käufer 100 nun, an dem Verfahren teilzunehmen, also eine reduzierte Version des von ihm erworbenen Musikstücks in Form eines Previews an einen Dritten weiterzugeben, so wählt er zunächst bei 400 aus, welche Inhalte, also welche Musikstücke erfindungsgemäß verteilt werden sollen. Beispielhaft sei angenommen, dass lediglich ein Musikstück, also ein Inhalt, ausgewählt wird. Den Musikstücken, die durch den ersten Käufer 100 erworben wurden, wurden jeweils eindeutige Identifikationsdaten, die sogenannten Inhaltsidentifikationsdaten, zugeordnet, die im Schritt 400 ebenfalls extrahiert bzw. herausgezogen werden. Anschließend erfolgt der Login des ersten Käufers 100 beim Server 102 und die Übertragung der Inhaltsidentifikationsdaten an den Server 102, um diesem anzuzeigen, für welche Musikstücke oder Inhalte der erste Käufer 100 an dem erfindungsgemäßen Verfahren teilnehmen möchte (siehe Pfeil 402).

Basierend auf der Login-Information und den Inhaltsidentifikationsdaten überprüft der Server 102 zunächst bei 402, ob der erste Käufer 100 ein registrierter Nutzer ist, und wenn dies bestätigt wird, werden die dem Inhalt (Content) zugeordneten Metadaten z.B. aus der Server-Datenbank oder von einem gesonderten Metadaten-Service. wiedergewonnen. Die Metadaten sind eine semantische Beschreibung des Inhalts und umfassen z.B. Informationen über Autor, Titel, Beschreibung, Veröffentlichungsdatum, Format, etc. Ferner kann die Überprüfung der "Zulassung" noch einen zweiten Schritt aufweisen, nämlich die Prüfung, ob der registrierte Nutzer auch eine Preview für den jeweiligen Content erzeugen darf (für den Fall, dass ein Rechteverwerter diese Art des Vertriebs nicht zulassen will). Anschließend wird bei 406 die Transaktion erzeugt, und die wiedergewonnenen Metadaten sowie die erzeugten Transaktionsdaten werden bei 408 an den ersten Käufer 100 zurückübertragen. Die Transaktion ist eine Umschreibung für verschiedene Aktionen am Server, die mit dem Kauf in Verbindung stehen. Im Normalfall umfasst dies, dass an dieser Stelle das Payment abgewickelt und eine eindeutige Transaktionsnummer erzeugt wird, die sich dann als "Käuferinfo" (bzw. indirekter Verweis auf den ursprünglichen Käufer, 310) für Previews verwenden lässt. Es gibt es natürlich auch andere Möglichkeiten, z.B. das Einbringen von Kundennummer, Loginname oder andere Informationen, die den Kunden eindeutig referenzieren. Basierend auf der Vollversion, die der erste Käufer 100 besitzt, und basierend auf den Daten, die bei 408 von dem Server 102 empfangen wurden, wird bei 410 zunächst nur basierend auf der Originalversion die reduzierte Version, das Preview, erzeugt, und dann bei 412, basierend auf den weiteren Informationen betreffend den ersten Käufer 100 sowie den Informationen, die von dem Server 102 empfangen wurden, das bei 410 erzeugte Preview personalisiert. Dieses personalisierte Preview kann dann wie bei 414 an den zweiten Käufer 108 verteilt werden, der bei 416 die erforderlichen Schritte durchführt, um aus dem personalisierten Preview die Informationen, die diesem hinzugefügt wurden, herauszuziehen, um so die Informationen von dem eigentlichen Preview zu trennen. Die Informationen können dann angezeigt werden, und das Preview kann, wie bei 418 gezeigt ist, abgespielt werden.

Entscheidet sich der zweite Käufer 108 zum Kauf der Vollversion des Musiktitels, so wird, wie bei 420 gezeigt ist, die erforderliche Inhaltsidentifikation zur Beschreibung des zu erwerbenden Musiktitels sowie die dem ersten Käufer 100 zugeordneten Personalisierungsdaten an den Server 102 weitergegeben. Dieser gewährt bei 422 dem ersten Käufer die festgelegte Belohnung, und bei 424 wird der Kauf des Musiktitels in Vollversion durch den zweiten Käufer 108 getätigt. Anschließend übersendet der Server 102 bei 426 die Vollversion an den zweiten Käufer 108.

Im Zusammenhang mit der obigen Beschreibung der Vorgehensweise gemäß Fig. 4 ist anzumerken, dass die bei 400 erforderliche Inhaltsidentifizierung durch eine Mehrzahl von Ansätzen realisiert werden kann. In Betracht kommen hierbei das CDDB-Protokoll für Audio-CDs/physische Träger, das sogenannte Audio-Fingerprinting für einzelne Titel, sowie die Verwendung von beliebigen eindeutigen Identifikationsmarkierungen, sofern diese in dem System verwendet werden und dem Anwender bekannt sind.

Die bei 410 beschriebene Erzeugung des Previews kann entweder unter Verwendung eines eigenen Formats oder unter Verwendung existierender Formate (z. B. MPEG-1/2 oder MPEG-4) erfolgen, wobei hier gegebenenfalls zusätzliche Daten als "Ancillary-Daten" oder bei MP3 im ID-Tag eingebracht werden können. Im Rahmen der Preview-Erzeugung erfolgt eine quantitative und/oder qualitative Abwertung der ursprünglichen Version. Die quantitative Abwertung des Originals kann beispielsweise durch das oben beschriebene manuelle oder automatische Schneiden des Musiktitels erfolgen, die entweder auf dem Server 102 festgelegt wird oder dem Anwender 100 überlassen wird. Für die qualitative Abwertung des Originals bietet sich eine Reduzierung der Bitrateund/oder der. Bandbreite der Vollversion an. Ferner können (aufgezeichnete) Sprachelemente und/oder Geräusche/Klänge eingefügt werden. Ferner bietet sich die Möglichkeit einer weiteren Codierung, wie es bereits oben dargelegt wurde.

Bei der Erzeugung der personalisierten Preview-Version bei 412 können die Zusatzinformationen, Bilder, Beschreibungen, Bewertungen, weitere Metadaten und ähnliches basierend auf der XML- bzw. HTML-Technologie eingebunden werden. Die Personalisierung bzw. die Einbringung der weiteren Informationen, die auf den Käufer verweisen, kann beispielsweise durch das Eintragen einer unverschlüsselten oder verschlüsselten Zahl erfolgen, die direkt oder indirekt (z. B. über eine Transaktionsnummer) auf den Käufer verweist. Ferner kann auch ein Wasserzeichen eingebracht werden, das die gerade genannten Informationen transportiert.

Optional können folgende Sicherheitsansätze noch realisiert werden. Bei der Preview-Erzeugung können der ursprüngliche Inhalt (die ursprüngliche Vollversion) und die Metadaten verbunden werden, z. B. über die Fingerprinting/Audio-Fingerprinting-Technologie (z. B. die Verwendung von Audio-ID). Zur Gewährleistung der Integrität und Authentizität von Daten können Verfahren wie Fingerprinting und digitale Signaturen verwendet werden. Alternativ kann auch ein Fingerprint hinterlegt werden. Zusätzlich kann eine sichere Übertragung der Daten, beispielsweise unter Verwendung der SSL-Schicht (secure socket layer) durchgeführt werden.

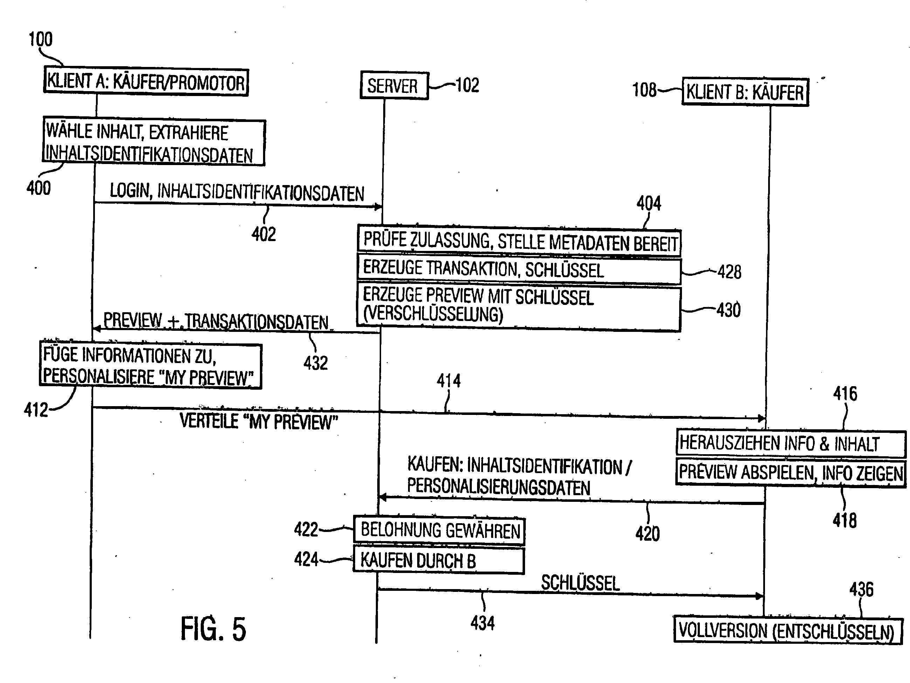

Anhand der Fig. 5 wird nachfolgend eine Ausführungsform der vorliegenden Erfindung beschrieben, die ähnlich zu der in Fig. 4 ist, wobei jedoch hier anstelle des "kleinen Previews" das erfindungsgemäße "große Preview" verwendet wird. Die in Fig. 5 gezeigten Blöcke, die zu den in Fig. 4 gezeigten Blöcken identisch sind, sind mit den gleichen Bezugszeichen versehen.

Wie sich aus einem Vergleich der Fig. 4 und 5 ergibt, unterscheiden sich die zwei genannten Verfahren nur in wenigen Punkten, wobei hier insbesondere zu erwähnen wäre, dass die reduzierte Version am Server durch Zuhilfenahme von Verschlüsselung erzeugt wird, und der Server zur Erzeugung der Vollversion lediglich den passenden Schlüssel an den Käufer weitergeben muss.

Im einzelnen wird im Server 102 nach der Überprüfung der Zulassung und der Wiedergewinnung der Metadaten im Schritt 404 im nachfolgenden Schritt 428, ähnlich wie im Schritt 406 in Fig. 4, zunächst eine Transaktion erzeugt, und hier zusätzliche ein Schlüssel. Basierend auf dem im Schritt 428 erzeugten Schlüssel wird im Schritt 430 im Server 102 die reduzierte Version der ursprünglichen Ware, also das Preview, erzeugt, indem zumindest Teile des Originals verschlüsselt werden. Anschließend wird das so erzeugte Preview zusammen mit den Transaktionsdaten an den ersten Käufer 100 übertragen, wie dies bei 432 gezeigt ist. Im Schritt 412 wird, wie auch in Fig. 4 schon gezeigt ist, der personalisierte Preview erzeugt, hier jedoch unter Heranziehung der von dem Server empfangenen Daten.

Die nachfolgenden Schritte bis zum Kauf durch den zweiten Käufer 108 entsprechen denen in Fig. 4. Anders als in Fig. 4 wird bei diesem Ausführungsbeispiel jedoch durch den Server 102 nach dem Kauf keine Vollversion an den zweiten Käufer 108 geschickt, sondern vielmehr wird, wie bei 434 gezeigt ist, der Schlüssel zum Entschlüsseln an den zweiten Käufer 108 übertragen, so dass dieser bei 436 durch Entschlüsseln der verschlüsselten Teile des "großen Previews" die Vollversion, also die Originalversion erhält.

Hinsichtlich der Erzeugung des Previews im Zusammenhang mit der Verwendung von "großen Previews" kommen vorzugsweise zwei Technologien in Frage. Die erste Technologie ist das sogenannte hierarchische Codieren (hierarchical coding). Hier wird die Originalversion derart verschlüsselt, dass eine sogenannte "Base-Layer" mit einer minderwertigen Version geringerer Bitrate erzeugt wird, und zusätzlich eine Verbesserungsschicht vorgesehen ist, die verschlüsselt vorliegt. Diese kann nur mit dem entsprechenden Schlüssel wieder entschlüsselt werden, woraus sich dann aufgrund der Kombination der zwei Schichten die Vollversion ergibt.

Ein weiterer Ansatzpunkt zum Erzeugen der großen Previews ist das Audioscrambling, wobei hier die Verschlüsselung direkt auf dem Bitstrom angewendet wird, so dass das Fehlen des entsprechenden Schlüssels zur Beeinträchtigung der Audioqualität führt.

Hinsichtlich der obigen Beschreibung der bevorzugten Ausführungsbeispiele anhand der Fig. 3 - 5 wird darauf hingewiesen, dass sich diese speziell auf Audiodaten bezogen hat, die vorliegende Erfindung jedoch nicht hierauf beschränkt ist. Die erfindungsgemäßen Grundprinzipien gelten allgemein für alle Daten, mittels denen eine virtuelle Ware dargestellt wird, und hier insbesondere Multimediadaten. Neben der oben beschriebenen Möglichkeit der Zahlung einer Provision an den ersten Käufer 100 stehen aber auch andere Möglichkeiten für Belohnungen offen, wobei hier beispielhaft Boni, Titel, Privilegien, Künstlerkontakte, Rabatte, Beteiligungen und ähnliches zu nennen wären.

Zusätzlich dazu, dass diese Belohnungen dem Käufer 100 gewährt werden, kann gemäß einer weiteren Ausgestaltung vorgesehen sein, dass diese Belohnungen auch zusätzlich dem zweiten Käufer 108 nach Erwerb der Vollversion zuteil werden.

Zusätzlich zu den oben beschriebenen Möglichkeiten der Erzeugung eines Previews auf dem Server oder auf Seiten des ersten Käufers 100 kann alternativ auch vorgesehen sein, auf dem Server 102 bereits vorgefertigte Previews bereitzustellen, die dann von dem Anwender 100 lediglich heruntergeladen werden.

Obwohl oben anhand der Fig. 4 und 5 Ausführungsbeispiele beschrieben wurden, bei denen die Personalisierung stets auf Seiten des ersten Käufers 100 stattfindet, kann dies auf der Grundlage von Informationen bezüglich des ersten Käufers 100, die der Server 102 aufgrund der Registrierung des ersten Käufers 100 hat, auch serverseitig durchgeführt werden, wobei hier dann nur eine eingeschränkte weitere Gestaltungsmöglichkeit seitens des ersten Käufers 100 besteht.

Obwohl oben anhand der bevorzugten Ausführungsbeispiele Verfahren beschrieben wurden, bei denen lediglich ein einziges Preview an einen weiteren Käufer verteilt wird, ist darauf hinzuweisen, dass die vorliegende Erfindung natürlich nicht hierauf beschränkt ist. Vielmehr könnte auch durch eine Modifikation vorgesehen sein, dass der Käufer 100 eine Mehrzahl von Previews zusammenfasst, um ein Paket zu bilden, und dieses Paket personalisiert. Dieses Paket würde dann durch den erste Käufer 100 an den weiteren Käufer 108 verteilt, und dieser könnte sich aus dem Paket eine, mehrere oder alle Previews auswählen und kaufen, wobei dann beim Kauf jeweils die entsprechende Information über den ersten Käufer 100 wieder an den Server 102 geleitet wird, um so dem ersten Käufer seine Belohnung zukommen zu lassen.

Neben den oben anhand der Fig. 4 und 5 beschriebenen Anwendungsfällen, bei denen die nachträgliche Teilnahme an dem erfindungsgemäßen Verfahren nach einem traditionellen Kauf (über einen physischen Träger) oder nach einem Online-Kauf (über eine Datei) beschrieben wurde, bestehen auch die folgenden weiteren Möglichkeiten zur Verwendung des erfindungsgemäßen Verfahrens.

Gemäß einem ersten Beispiel könnte das erfindungsgemäße Verfahren auch bei Neuerwerbungen über ein Download-Portal verwendet werden, wobei hier das Verfahren dann direkt von dem Server 102 angestoßen wird. Die Identifizierung gemäß den Schritten 400 und 402 würde dann entfallen. Die erforderlichen Informationen über den Käufer 100 würde der Server 102 dann direkt aus den Informationen erhalten, die im Rahmen des Erwerbs der Datei durch den Käufer bereitgestellt werden.

Bei P2P-Dienstleistern könnten die Dateien der Previews gemeinsam verwendet werden, anstelle der Verwendung der Dateien der Originale.

Bei Scout- und Preview-Portalen werden die Previews zum kostenlosen Download angeboten, um hier einen Popularitätstest für den neuen Inhalt durchzuführen, wobei dieser durch eine Messung von Wert und Verbreitung erfolgt. Mit dem Download würden die erforderlichen Informationen von demjenigen, der den Download gestartet hat, abgefragt, um diese in die Preview-Datei einzufügen.

Über Druckmedien, beispielsweise bei Konzerten, Kinos usw., werden Zugangscodes für bestimmte Previews verteilt, wobei hier im Rahmen der Bestellung dieser Previews zusätzliche Informationen betreffend den Erwerber eingeholt werden, die dann zusammen mit dem Preview in einer Datei dem Erwerber bereitgestellt werden.

Eine massenhafte Verbreitung über Netzwerke oder physische Träger kann vorgesehen sein, vor allen Dingen für die "großen Previews". Hier wird die Personalisierung nicht auf den individuellen Käufer, sondern vielmehr auf das Unternehmen ausgerichtet sein, welches die Verbreitung in diesem Rahmen unternimmt, so dass nach einem Kauf einer Vollversion aufgrund eines solchermaßen erhaltenen Previews die entsprechende Belohung dem Promotor/Unternehmen zufließt. Die Grundprinzipien wären jedoch die gleichen, mit der Ausnahme, dass hier anstelle des einzelnen Käufers, wie bei den beschriebenen Ausführungsbeispielen, eine Gruppe von Personen oder eine juristische Person die Belohnung erhalten würde.

Erfindungsgemäß wird somit ein verbessertes Verfahren geschaffen, mit dem eine Vielzahl von Dateien an Dritte verteilt werden kann, wobei hier die Möglichkeit geschaffen wird, einen Verteiler/ersten Käufer dann zu belohnen, wenn eine der weiteren Parteien auf der Grundlage des Previews die Vollversion kauft. Der Vorteil besteht insbesondere darin, dass es nunmehr nicht mehr erforderlich ist, direkt die Vollversion an den weiteren Dritten zu verteilen, sondern nur die reduzierte Version. Aufgrund der feststehenden Belohnung schafft die vorliegende Erfindung somit auch einen Anreiz für den erste Käufer, nicht das Original weiterzugeben, sondern lediglich das reduzierte Preview.

Abhängig von den Gegebenheiten kann das erfindungsgemäße Verfahren in Hardware oder in Software implementiert werden. Die Implementierung kann auf einem digitalen Speichermedium, insbesondere einer Diskette oder CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. Mit anderen Worten ausgedrückt kann die Erfindung somit als ein Computerprogramm mit einem Programmcode zur Durchführung des Verfahrens realisiert werden, wenn das Computerprogramm auf einem Computer abläuft.

Die Aufgabe des oben bei den bevorzugten Ausführungsbeispielen beschriebenen Servers, der die notwendigen Informationen und Daten zur Preview-Erzeugung und Personalisierung sowie zur Zurechnung der Belohnung bereit stellt, kann alternativ auch von einem zentralen Dienst/Server (der den entsprechenden Preview-Service für alle Content Provider zur Verfügung stellt) übernommen werden.

## Patentansprüche

1. Verfahren zum Verteilen einer virtuellen Ware von einem ersten Käufer (100) an einen zweiten Käufer (108) unter Verwendung eines Servers (102), mit folgenden Schritten:
nachdem der erste Käufer (100) ein vorbestimmtes Recht an der ursprünglichen Version der virtuellen Ware von einem Anbieter erworben hat und von dem Anbieter die virtuelle Ware in einer ursprünglichen Version (300) in digitaler Form mit einer vorbestimmten Qualität erhalten hat,
Auswählen (400), durch den ersten Käufer (100), der zu verteilenden virtuellen Ware und Extrahieren von Inhaltsidentifikationsdaten, die die virtuelle Ware identifizieren;
Einloggen (402), durch den ersten Käufer (100), bei dem Server (102) und Übertragen der Inhaltsidentifikationsdaten zu dem Server (102);
nach dem Einloggen (402), Empfangen, durch den ersten Käufer (100), von dem Server (102) einer personalisierten Kopie (308) der virtuellen Ware mit reduzierter Qualität, wobei die Kopie der virtuellen Ware mit reduzierter Qualität alle Informationen zur Vollwertigkeit in sich trägt, wobei die Vollwertigkeit nur durch einen Schlüssel erreichbar ist;
Verteilen (414), durch den ersten Käufer (100), lediglich der personalisierten Kopie (308) der virtuellen Ware mit reduzierter Qualität zu dem zweiten Käufer (108); und
nach dem Verteilen (414), Erhalten (118), durch den ersten Käufer (100), einer Belohnung, wenn der zweite Käufer (108) basierend auf der personalisierten Kopie (308) der virtuellen Ware mit reduzierter Qualität eine Vollversion der virtuellen Ware erworben hat.

2. Verfahren zum Verteilen einer virtuellen Ware von einem ersten Käufer an einen zweiten Käufer (108) unter Verwendung eines Servers (102), mit folgenden Schritten:
Empfangen, durch den Server (102), von Login-Informationen und von Inhaltsidentifikationsdaten, die eine zu verteilende virtuelle Ware identifizieren, von dem ersten Käufer (100), nachdem der erste Käufer (100) ein vorbestimmtes Recht an der ursprünglichen Version der virtuellen Ware von einem Anbieter erworben hat und von dem Anbieter die virtuelle Ware in einer ursprünglichen Version (300) in digitaler Form mit einer vorbestimmten Qualität erhalten hat;
Überprüfen (404), durch den Server (102), ob der erste Käufer (100) ein registrierter Nutzer ist, basierend auf den Login-Informationen;
nach dem Überprüfen (404), Erzeugen und Senden einer personalisierten Kopie (308) der virtuellen Ware mit reduzierter Qualität, durch den Server (102), zu dem ersten Käufer (100), wobei die Kopie der virtuellen Ware mit reduzierter Qualität alle Informationen zur Vollwertigkeit in sich trägt, wobei die Vollwertigkeit nur durch einen Schlüssel erreichbar ist;
nach dem Erzeugen (406), Erhalten (420), durch den Server (102), von Inhaltsidentifikationsdaten, die die virtuelle Ware identifizieren, und von Informationen, die den ersten Käufer (100) eindeutig referenzieren, von dem zweiten Käufer (108);
Gewähren (422) einer Belohnung durch den Server (102), wenn der zweite Käufer basierend auf der personalisierten Kopie (308) der virtuellen Ware mit reduzierter Qualität einen Kauf einer Vollversion der virtuellen Ware getätigt hat; und
Senden (434), durch den Server (102), des Schlüssels zu dem zweiten Käufer (108).

3. Verfahren nach Anspruch 1 oder 2, bei dem die reduzierte Version (308) der virtuellen Ware eine zumindest teilweise verschlüsselte Version der ursprünglichen Version der virtuellen Ware ist.

4. Verfahren nach Anspruch 3, bei dem die Kopie der virtuellen Ware mit reduzierter Qualität eine zumindest teilweise verschlüsselte Version der ursprünglichen Version der virtuellen Ware ist, und bei dem der Schlüssel ein Schlüssel zum Entschlüsseln der verschlüsselten Version ist, um die vollwertige Version der Kopie der virtuellen Ware wiederherzustellen.

5. Verfahren nach Anspruch 1, bei dem der Schritt des Erzeugens (410) einer Kopie (308) der virtuellen Ware mit reduzierter Qualität ein zumindest teilweises Verschlüsseln der ursprünglichen Version der virtuellen Ware umfasst.

6. Verfahren nach Anspruch 1, bei dem vor der Schritt des Verteilens (414) lediglich der personalisierten Kopie (308) der virtuellen Ware mit reduzierter Qualität zu dem zweiten Käufer (108) Zusatzdaten (312, 314) in die personalisierte Kopie der virtuellen Ware mit reduzierter Qualität eingebracht werden.

7. Verfahren nach Anspruch 1, bei dem der Schritt des Verteilens (414) lediglich der personalisierten Kopie der virtuellen Ware ein Verteilen über ein Netzwerk, eine drahtlose Verbindung und/oder ein tragbares Speichermedium umfasst.

8. Computerprogramm mit einem Programmcode zur Durchführung des Verfahrens nach einem der Ansprüche 1 bis 7, wenn das Programm auf einem Computer abläuft.

## Claims

1. A method of passing on a virtual product from a first buyer (100) to a second buyer (108) using a server (102), comprising:
the first buyer (100) having acquired a predetermined right to the original version of the virtual product from a provider and having obtained, from the provider, the virtual product in an original version (300) in a digital form having a predetermined quality,
selecting (400), by the first buyer (100), the virtual product to be passed on and extracting content identification data identifying the virtual product;
logging in (402), by the first buyer (100), at the server (102) and transmitting the content identification data to the server (102);
after logging in (402), receiving, by the first buyer (100), from the server (102), a personalized copy (308) of the virtual product having reduced quality, the copy of the virtual product having reduced quality containing all the information required for becoming a full-value product, the full-value product being achievable by a key only;
passing on (414), by the first buyer (100), only the personalized copy (308) of the virtual product having reduced quality to the second buyer (108); and
after passing on (414), obtaining (118), by the first buyer (100), a reward once the second buyer (108) has acquired a full version of the virtual product on the basis of the personalized copy (308) of the virtual product having reduced quality.

2. A method of passing on a virtual product from a first buyer to a second buyer (108) using a server (102), the method comprising:
receiving, by the server (102), login information and content identification data identifying a virtual product to be passed on from the first buyer (100), the first buyer (100) having acquired a predetermined right to the original version of the virtual product from a provider, and having obtained the virtual product in an original version (300) in a digital form having a predetermined quality from the provider;
verifying (404), by the server (102), on the basis of the login information, if the first buyer (100) is a registered user;
after verifying (404), creating and transmitting, by the server (102), a personalized copy (308) of the virtual product having reduced quality to the first buyer (100), the copy of the virtual product having reduced quality containing all the information required for becoming a full-value product, the full-value product being achievable by a key only;
after creating (406), obtaining (420), by the server (102), content identification data identifying the virtual product, and information uniquely referencing the first buyer (100) from the second buyer (108);
granting (422) a reward on the part of the server (102) once the second buyer has purchased a full version of the virtual product on the basis of the personalized copy (308) of the virtual product having reduced quality; and
transmitting (434) the key to the second buyer (108) by the server (102).

3. The method as claimed in claim 1 or 2, wherein the reduced version (308) of the virtual product is an at least partly encrypted version of the original version of the virtual product.

4. The method as claimed in claim 3, wherein the copy of the virtual product having reduced quality is an at least partly encrypted version of the original version of the virtual product, and wherein the key is a key for decrypting the encrypted version in order to restore the full-value version of the copy of the virtual product.

5. The method as claimed in claim 1, wherein the step of creating (410) a copy (308) of the virtual product having reduced quality includes at least partially encrypting the original version of the virtual product.

6. The method as claimed in claim 1, wherein, before the step of passing on (414) only the personalized copy (308) of the virtual product having reduced quality to the second buyer (108), additional data (312, 314) are introduced into the personalized copy of the virtual product having reduced quality.

7. The method as claimed in claim 1, wherein the step of passing on (414) only the personalized copy of the virtual product includes passing on via a network, a wireless connection and/or a portable storage medium.

8. A computer program having a program code for carrying out the method as claimed in one of claims 1 to 7, if the program runs on a computer.

## Revendications

1. Procédé pour distribuer une marchandise virtuelle d'un premier acheteur (100) à un deuxième acheteur (108) à l'aide d'un serveur (102), comprenant les étapes suivantes consistant à:
après que le premier acheteur (100) ait acquis un droit prédéterminé sur la version originale de la marchandise virtuelle d'un fournisseur et ait obtenu du fournisseur la marchandise virtuelle dans une version originale (300) sous forme numérique avec une qualité prédéterminée,
sélectionner (400), par le premier acheteur (100), la marchandise virtuelle à distribuer et extraire les données d'identification de contenu qui identifient la marchandise virtuelle;
connecter (402), par le premier acheteur (100), au serveur (102) et transmettre les données d'identification de contenu au serveur (102);
après la connexion (402), recevoir, par le premier acheteur (100), du serveur (102) une copie personnalisée (308) de la marchandise virtuelle de qualité réduite, la copie de la marchandise virtuelle de qualité réduite contenant toutes les informations pour l'intégrité, l'intégrité ne pouvant être obtenue que par une clé;
distribuer (414), par le premier acheteur (100), uniquement la copie personnalisée (308) de la marchandise virtuelle de qualité réduite au deuxième acheteur (108); et
après distribution (414), obtenir (118), par le premier acheteur (100), une rémunération lorsque le deuxième acheteur (108) a acquis, sur base de la copie personnalisée (308) de la marchandise virtuelle de qualité réduite, une version complète de la marchandise virtuelle.

2. Procédé de distribution d'une marchandise virtuelle d'un premier acheteur à un deuxième acheteur (108) à l'aide d'un serveur (102), aux étapes suivantes consistant à:
recevoir, par le serveur (102), du premier acheteur (100) les informations de connexion et les données d'identification de contenu qui identifient une marchandise virtuelle à distribuer après que le premier acheteur (100) ait acquis d'un fournisseur un droit prédéterminé sur la version originale de la marchandise virtuelle et ait reçu du fournisseur la marchandise virtuelle dans une version originale (300) sous forme numérique avec une qualité prédéterminée;
vérifier (404), par le serveur (102), si le premier acheteur (100) est un utilisateur enregistré, sur base des informations de connexion;
après la vérification (404), générer et transmettre une copie personnalisée (308) de la marchandise virtuelle de qualité réduite, par le serveur (102), au premier acheteur (100), la copie de la marchandise virtuelle de qualité réduite contenant toutes les informations sur l'intégrité, l'intégrité pouvant être obtenue uniquement par une clé;
après la génération (406), obtenir (420), par le serveur (102), des données d'identification de contenu qui identifient la marchandise virtuelle, et les informations qui référencent le premier acheteur (100) de manière univoque, du deuxième acheteur (108);
accorder (422) une rémunération par le serveur (102) lorsque le deuxième acheteur a réalisé, sur base de la copie personnalisée (308) de la marchandise virtuelle de qualité réduite, un achat d'une version complète de la marchandise virtuelle; et
envoyer (434), par le serveur (102), la clé au deuxième acheteur (108).

3. Procédé selon la revendication 1 ou 2, dans lequel la version réduite (308) de la marchandise virtuelle est une version au moins partiellement cryptée de la version originale de la marchandise virtuelle.

4. Procédé selon la revendication 3, dans lequel la copie de la marchandise virtuelle de qualité réduite est une version au moins partiellement cryptée de la version originale de la marchandise virtuelle, et dans lequel la clé est une clé pour décrypter la version cryptée, pour restaurer la version intègre de la copie de la marchandise virtuelle.

5. Procédé selon la revendication 1, dans lequel l'étape consistant à générer (410) une copie (308) de la marchandise virtuelle de qualité réduite comporte le fait de crypter au moins partielment la version originale de la marchandise virtuelle.

6. Procédé selon la revendication 1, dans lequel, avant l'étape consistant à distribuer (414) uniquement la copie personnalisée (308) de la marchandise virtuelle de qualité réduite au deuxième acheteur (108), des données additionnelles (312, 314) sont introduites dans la copie personnalisée de la marchandise virtuelle de qualité réduite.

7. Procédé selon la revendication 1, dans lequel l'étape consistant à distribuer (414) uniquement la copie personnalisée de la marchandise virtuelle comporte le fait de distribuer sur un réseau, une connexion sans fil et/ou un support de mémoire portable.

8. Programme d'ordinateur avec un code de programme pour réaliser le procédé selon l'une des revendications 1 à 7 lorsque le programme est exécuté sur un ordinateur.
